Europäisches Patentamt

European Patent Office

Office européen des brevets

(11) Numéro de publication: **0 432 007 A1**

# DEMANDE DE BREVET EUROPEEN

(21) Numéro de dépôt: **90403319.8**

(22) Date de dépôt: **23.11.90**

(51) Int. Cl.⁵: **C01B 21/064, C10M 125/26**

(30) Priorité: **08.12.89 FR 8916243**

(43) Date de publication de la demande:
**12.06.91 Bulletin 91/24**

(84) Etats contractants désignés:
**AT BE CH DE DK ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Iltis, Alain**
**135, rue Daniel Casanova**
**F-93300 Aubervilliers(FR)**

(74) Mandataire: **Dubruc, Philippe et al**
**RHONE-POULENC INTERSERVICES Service**
**Brevets Chimie 25, quai Paul-Doumer**
**F-92408 Courbevoie Cédex(FR)**

(54) **Nitrure de bore hexagonal monodisperse de haute pureté vis à vis des métaux et de l'oxygène et son procédé de préparation.**

(57) L'invention concerne un nitrure de bore constitué de plaquettes de forme cristalline hexagonale d'au plus 0,4 $\mu$m, d'une pureté d'au moins 99% et présentant une teneur d'au plus 500 ppm en impuretés métalliques et en silicium.

Ce nitrure est obtenu par un procécé dans lequel on soumet du nitrure de bore issu de la synthèse en phase gazeuse ou issu de la réaction de l'ammoniac liquide sur un halogénure de bore, à une double calcination; la première étant effectuée sous une atmosphère neutre et confinée, la seconde sous vide.

EP 0 432 007 A1

# NITRURE DE BORE HEXAGONAL MONODISPERSE DE HAUTE PURETE VIS-A-VIS DES METAUX ET DE L'OXYGENE ET SON PROCEDE DE PREPARATION

La présente invention concerne la préparation d'un nitrure de bore sous forme de plaquettes hexagonales monodisperses, de très haute pureté vis-à-vis de l'oxygène et des impuretés métalliques, ainsi que la préparation d'un tel nitrure de bore.

Le nitrure de bore a de très nombreuses applications industrielles. Il est ainsi utilisé comme réfractaire, comme isolant ou comme lubrifiant.

Selon l'application envisagée et c'est le cas notamment de l'utilisation comme lubrifiant, il est important de disposer d'un nitrure de bore de haute pureté et constitué de plaquettes hexagonales. Il est aussi intéressant de disposer d'un produit monodisperse et submicronique.

Cependant, le nitrure de bore peut se présenter sous des formes différentes selon son mode de préparation. Ainsi, pour un nitrure de bore issu de la réaction en phase gazeuse de l'ammoniac sur un hydrure ou un halogénure de bore, mais aussi pour un nitrure de bore issu de la réaction en phase liquide de l'ammoniac sur un halogénure de bore, il se présente sous forme de particules sphériques de structure amorphe, contenant une quantité trop importante d'oxygène et dont la réactivité avec l'atmosphère est élevée.

Or il est très difficile de cristalliser et purifier un tel produit. En effet, il faut que les particules passent d'une structure très mal organisée à une structure ordonnée. De plus, l'oxygène doit être éliminé.

Un premier objet de l'invention est constitué par un nitrure de bore de haute pureté issu notamment de l'une des synthèses précitées et cristallisé sous forme de plaquettes hexagonales.

Un second objet est constitué par un nitrure de bore présentant par ailleurs une microstructure fine.

Enfin, un dernier objet est la préparation d'un tel nitrure de bore.

Dans ce but, le nitrure de bore selon l'invention est constitué de plaquettes submicroniques de forme cristalline hexagonale d'au plus 0,4μm.

Ce nitrure de bore présente une pureté vis-à-vis de l'oxygène d'au moins 99% ainsi qu'une teneur en impuretés métalliques et en silicium d'au plus 500 ppm.

D'autre part, le procédé de préparation d'un nitrure de bore selon l'invention est caractérisé en ce que l'on soumet le nitrure de bore issu de la synthèse en phase gazeuse ou issu de la réaction de l'ammoniac liquide sur un halogénure de bore, à une double calcination; la première sous atmosphère neutre et confinée, la seconde sous vide.

Le procédé selon l'invention présente, entre autres avantages, celui de contrôler efficacement la cristallisation du nitrure de bore. Il permet, outre ce contrôle, d'obtenir un produit très pur. Enfin, il permet aussi de préparer un produit monodisperse et éventuellement de limiter la croissance de la taille des particules puisque les plaquettes constituant le produit final peuvent présenter une granulométrie du même ordre de grandeur que les sphères du produit initial.

D'autres avantages et caractéristiques de l'invention apparaîtront plus clairement à la lecture de la description et des exemples qui vont suivre.

Le nitrure de bore selon l'invention est constitué de plaquettes submicroniques de forme cristalline hexagonales d'au plus 0,4μm.

Selon un mode préféré de réalisation de l'invention, le nitrure de bore présente des plaquettes d'une taille d'au plus 0,3μm et de préférence comprise entre 0,2μm et 0,15μm; les tailles étant déterminées par MEB.

Ces plaquettes sont par ailleurs présentes sous forme de particules monodisperses.

Le nitrure de bore selon l'invention est aussi caractérisé par sa grande pureté vis-à-vis de l'oxygène puisque celle-ci est d'au moins 99% et de préférence d'au moins 99,3%.

Une autre caractéristique du nitrure de bore selon l'invention est sa très faible teneur en silicium et en impuretés métalliques, telles que les métaux alcalins et alcalino-terreux. En effet, ces impuretés ont une teneur d'au plus 500 ppm et de préférence d'au plus 300 ppm et encore plus particulièrement d'au plus 200 ppm.

Par ailleurs, le nitrure de bore selon l'invention est substantiellement exempt de carbone. Par substantiellement exempt, on entend une teneur en carbone d'au plus 300 ppm et plus particulièrement d'au plus 100 ppm.

En effet, comme il a été dit précédemment, l'invention s'applique notamment à un nitrure de bore issu de la réaction de l'ammoniac gazeux ou liquide sur un halogénure de bore. Il est bien connu que de tels procédés donnent un nitrure de bore substantiellement exempt de carbone au sens donné ci-dessus.

De plus, les plaquettes de nitrure de bore sont caractérisées par la valeur de "Lc". Celle-ci correspond à la distance moyenne perpendiculaire à l'axe d'empilement sur laquelle on ne constate aucun défaut. Elle est mesurée par étude cristallographique et mesure de la largeur de la raie (002).

Ainsi, les plaquettes de forme cristalline hexagonales de nitrure de bore ont une "Lc" d'au plus 350Å.

Enfin, le nitrure de bore selon l'invention a une chimie de surface du type hydrophobe.

Un tel produit se caractérise essentiellement par la valeur de son pH.

Ce pH est mesuré de la manière suivante :

On prépare un mélange eau-éthanol dans les proportions respectives de 30 à 70% en volume. On ajuste la valeur du pH de ce mélange à 7 + 1 par addition de soude. On introduit ensuite 0,3 g de nitrure de bore dans 20 cm³ du mélange. On note la valeur du pH et on ajoute 0,5 à cette valeur, ceci pour se ramener au cas où on effectuerait la mesure dans l'eau pure; le mélange eau-éthanol étant en effet utilisé parce que la dispersion du nitrure de bore y est plus facile que dans l'eau pure.

Le nitrure de bore de l'invention a un pH, tel que déterminé dans les conditions ci-dessus, qui est nettement basique. On entend par là une valeur d'au moins 8, de préférence au moins 8,5.

Le procédé de préparation du nitrure de bore va maintenant être décrit.

Comme on l'a vu plus haut, le procédé de l'invention part d'un nitrure de bore issu de deux types de synthèses.

D'une part, selon un premier type, les synthèses sont réalisées en phase gazeuse en faisant réagir de l'ammoniac sur un hydrure de bore ou un halogénure de bore. Généralement, on préfère utiliser un halogénure de bore et plus particulièrement le trichlorure de bore.

D'autre part, on peut aussi citer une synthèse en phase liquide consistant à faire réagir de l'ammoniac avec un halogénure de bore tel que le trichlorure de bore par exemple.

Généralement la synthèse selon le premier type est réalisée par action de l'ammoniac sur le trichlorure de bore en phase gazeuse. Dans un tel cas, on obtient un nitrure de bore de structure amorphe. Il se présente sous forme de particules primaires sphériques.

Par ailleurs, le nitrure de bore avant le traitement de l'invention doit contenir au moins 5 et de préférence entre 5 et 20% en poids d'oxygène.

De préférence, cet oxygène doit être réparti de façon homogène à la surface des particules de nitrure de bore. Un tel résultat peut être obtenu entre autres par oxydation spontanée ou non du nitrure de bore synthétisé comme décrit ci-dessus, la première résultant du simple stockage à l'air du produit, ou encore par hydrolyse ménagée de celui-ci.

La première étape du traitement consiste à calciner le nitrure de bore sous une atmosphère neutre et confinée.

Dans cette étape, le nitrure de bore est utilisé sous une forme telle que sa densité apparente est d'au minimum 0,1 g/cm³ et plus particulièrement entre 0,2 g/cm³ et 0,35 g/cm³; cette densité apparente étant généralement obtenue par un compactage préalable. Une telle opération est intéressante pour plusieurs raisons.

D'une part, elle permet une manipulation plus facile de la poudre de nitrure de bore.

D'autre part, elle contribue à augmenter la productivité du procédé en permettant le traitement dans le four de quantités de produit plus importantes.

En ce qui concerne l'atmosphère neutre, celle-ci peut être constituée, soit par un gaz rare, soit par de l'azote. Habituellement, on utilise une atmosphère d'azote.

Par atmosphère confinée, on entend ici une atmosphère faiblement renouvelée dans laquelle le dégagement des oxydes de bore volatils est retardé. En d'autres termes, on travaille dans des conditions telles qu'à l'issue de cette première étape la teneur en oxygène du nitrure de bore ne diffère sensiblement pas de celle du nitrure de départ, cette différence étant de 10% au maximum. En pratique, un confinement adéquat peut être obtenu en enfermant le nitrure de bore dans un récipient de graphite.

Enfin, le traitement se fait de préférence à une pression qui se situe au voisinage de la pression atmosphérique.

La température de calcination est généralement supérieure à 1450°C. Elle peut être plus particulièrement comprise entre 1500°C et 1800°C et plus spécialement entre 1500°C et 1600°C. En-dessous de 1450°C, l'énergie n'est pas suffisante pour démarrer la cristallisation du nitrure de bore, c'est-à-dire la transition entre la structure amorphe des particules issues de la synthèse en phase gazeuse, et la structure en plaquettes hexagonales. Par contre, en palier et au-delà de 1800°C, l'élimination des oxydes de bore devient trop importante et a pour conséquence l'obtention d'un produit mal cristallisé en fin de traitement.

La durée de cette première étape est de quelques heures, par exemple environ deux heures. On notera que cette durée est d'autant plus faible que la température du traitement est élevée.

Concernant la seconde calcination, celle-ci est effectuée sous vide. De préférence, on opère sous vide dynamique. A titre d'exemple la valeur du vide est comprise entre 10 et 500 Pa.

La température de calcination, variant en fonction du vide, doit être suffisante pour permettre l'élimination de l'oxygène dans cette étape. Habituellement, cette température est d'au moins 1500°C et généralement comprise entre 1500°C et 2200°C. De préférence, la seconde calcination est effectuée entre 1500° et 1800°C.

La durée de cette seconde étape est de quelques heures, en particulier d'environ 1 heure. Cette durée est aussi fonction de la température.

Selon un mode de réalisation préféré, les deux calcinations sont effectuées durant le même cycle thermique en évacuant l'azote à la fin de la première étape.

Des exemples concrets mais non limitatifs de l'invention vont maintenant être présentés.

Pour ces exemples, la densité tassée à sec est mesurée de la manière suivante :

On pèse une certaine quantité de poudre et on la place dans une éprouvette d'un diamètre d'un cm et d'une longueur de 10 cm. On fait vibrer l'éprouvette par un vibreur à ultra-sons. On arrête la vibration lorsque la poudre a atteint une hauteur minimale de tassement. La détermination du volume occupé par la poudre tassée donne accès à la densité tassée.

## EXEMPLE 1

On part de 400 g de nitrure de bore obtenu par la réaction en phase gazeuse d'ammoniac sur le trichlorure de bore. Le nitrure de bore utilisé contient environ 9% en poids d'oxygène, résultant de l'oxydation spontanée durant le stockage à l'air de celui-ci. Le nitrure de bore est préalablement compacté, et se présente sous forme d'une poudre de densité 0,2 g/cm$^3$.

Le nitrure de bore est calciné avec le cycle thermique suivant : montée 200°C/h puis 2 heures de palier à 1500°C en atmosphère d'azote confinée ($pN_2 = 8.10^4$ Pa).

On réalise ensuite une seconde calcination sous vide. A l'issue de ce traitement, le produit présente les caractéristiques suivantes :

| | |
|---|---|
| - morphologie | : plaquettes hexagonales de taille moyenne 0,15 µm (mesurée par microscopie électronique à balayage) |
| - couleur | : blanc (ce qui indique une absence de carbone dans le nitrure de bore) |
| - teneur en oxygène | : 0,6% |
| - surface spécifique (BET) | : 32 m2/g |
| - densité tassée à sec | : 0,27 g/cm3 |
| - Lc | : 315 Å |
| - La | : 725 Å |

La correspond au diamètre moyen d'un plan graphitique.

Enfin, le produit est monodisperse, il présente un coefficient de variation $(d_{16} - d_{84})/2d_{50}$ mesuré par analyse d'image de 0,5.

$d_n$ étant le diamètre pour lequel n % des particules ont une taille inférieure à ce diamètre.

## EXEMPLE 2 COMPARATIF

On utilise le même nitrure de bore que celui de départ de l'exemple 1 dans la même quantité.

On lui fait subir d'abord le traitement sous vide et ensuite le traitement sous azote dans des conditions identiques à celles de l'exemple 1. On obtient un produit turbostratique et de teneur en oxygène de 2,5%.

**Revendications**

1. Nitrure de bore constitué de plaquettes de forme cristalline hexagonale d'au plus 0,4μm, d'une pureté d'au moins 99% et présentant une teneur d'au plus 500 ppm en impuretés métalliques et en silicium.

2. Nitrure de bore selon la revendication 1, caractérisé en ce que la taille des plaquettes est d'au plus 0,3μm, de préférence comprise entre 0,2 et 0,15μm.

3. Nitrure de bore selon l'une des revendications précédentes, caractérisé en ce que la pureté en oxygène est d'au moins 99,3%.

4. Nitrure de bore selon l'une des revendications précédentes, caractérisé en ce que la teneur en impuretés métalliques et en silicium et d'au plus 300 ppm et plus particulièrement d'au plus 200 ppm.

5. Nitrure de bore selon l'une des revendications précédentes, caractérisé en ce que les plaquettes présentent une Lc d'au plus 350 Å.

6. Nitrure de bore selon l'une des revendications précédentes, caractérisé en ce que les plaquettes sont monodisperses.

7. Procédé de préparation d'un nitrure de bore selon l'une des revendications 1 à 6, caractérisé en ce que l'on soumet du nitrure de bore issu de la synthèse en phase gazeuse ou issu de la réaction de l'ammoniac liquide sur un halogénure de bore, à une double calcination; la première étant effectuée sous une atmosphère neutre et confinée, la seconde sous vide.

8. Procédé selon la revendication 7, caractérisé en ce que l'atmosphère neutre et confinée est une atmosphère d'azote.

9. Procédé selon l'une des revendications 7 à 8, caractérisé en ce que l'on effectue la première calcination à une température supérieure à 1450°C.

10. Procédé selon l'une des revendications 7 à 9, caractérisé en ce que l'on effectue la première calcination à une température comprise entre 1500°C et 1800°C.

11. Procédé selon l'une des revendications 7 à 10, caractérisé en ce que l'on effectue la seconde calcination à une température d'au moins 1500°C.

12. Procédé selon l'une des revendications 7 à 11, caractérisé en ce que l'on effectue la seconde calcination à une température comprise entre 1500°C et 2000°C.

13. Procédé selon l'une des revendications 7 à 12, caractérisé en ce qu'on soumet à la double calcination précitée un nitrure de bore obtenu par réaction en phase gazeuse de l'ammoniac sur un halogénure de bore.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 137 652 (YUKAMELAMIN COMPANY) <br> * abrégé; page 4; lignes 18,19; exemple 1; figure 2 * | 1-6 | C 01 B 21/064 <br> C 10 M 125/26 |
| Y | CHEMICAL ABSTRACTS, vol. 106, no. 12, mars 1987 Columbus, Ohio, USA T. Ogasawara et al.: "Manufacture of high-purity hexagonal boron nitride fine powder." page 145; ref. no. 87163 J <br> * abrégé & JP-A-61256905 (KAWASAKI STEEL) * | 1-6 | |
| X,Y | CHEMICAL ABSTRACTS, vol. 109, no. 20, novembre 1988 Columbus, Ohio, USA T. Koshida et al.: "Preparation of high-purity hexagonal crystalline boron nitride powder." page 147; ref. no. 172986 M <br> * abrégé & JP-A-62100404 (KAWASAKI STEEL) * | 7-12,13 | |
| Y | US-A-4 544 535 (BRANOVICH) <br> * le document en entier * | 13 | |
| A | CHEMICAL ABSTRACTS, vol. 107, no. 10, septembre 1987 Columbus, Ohio, USA Y. Yoshida et al.: "Manufacture of boron nitride." page 157; ref. no. 80509 P <br> * abrégé * | 7-12 | DOMAINES TECHNIQUES RECHERCHES (Int. Cl.5) |
| A | CHEMICAL ABSTRACTS, vol. 100, no. 4, janvier 1984 Columbus, Ohio, USA Nat. Inst. for Res. in Inorg. Mat.: "Purification of boron nitride." page 72; ref. no. 24032 W <br> * abrégé & JP-A-53181708 (NAT. INST. RES. INORG. MAT.) * | 7 | C 01 B |
| A | EP-A-0 170 817 (KAWASAKI STEEL) | | |

Le présent rapport de recherche a été établi pour toutes les revendications

| Lieu de la recherche | Date d'achèvement de la recherche | Examinateur |
|---|---|---|
| La Haye | 18 février 91 | ZALM W.E. |